# EUROPEAN PATENT APPLICATION

(11) **EP 4 810 953 A2**
(43) Date of publication of application: **23.09.2026**
(21) Application number: 26197185.7
(22) Date of filing: 05.07.2024
(51) Int. Cl.: G01N 27/82

(54) **A METHOD AND APPARATUS FOR MONITORING STRESS IN STEEL LIGAMENTS WITHIN A FLEXIBLE PIPE**

(30) Priority: 07.07.2023 GB 202310492
(62) Document number(s) of the earlier application(s) in accordance with Art. 76 EPC: 24743266.9 / 4 739 986
(71) Applicant: Baker Hughes Energy Technology UK Limited, Bristol BS48 1BS (GB)
(72) Inventor: BUTTLE, David John, Newcastle upon Tyne, NE6 3PF (GB)
(74) Representative: HGF

(57) **Abstract**

The present invention relates to a method (1200) and apparatus for monitoring stress in steel ligaments within a flexible pipe. The method comprises: subjecting (1202) a ligament to a first magnetic field and obtaining a first measurement indicative of a magnetic flux density near an outer surface of the pipe adjacent to the ligament; and subjecting (1204) the ligament to a second magnetic field and obtaining a second measurement indicative of the magnetic flux density near the outer surface of the pipe adjacent to the ligament. The first magnetic field comprises an alternating magnetic field and wherein the second magnetic field comprises a combination of the alternating magnetic field and a static magnetic field. The method further comprises comparing (1205) the first and second measurements and evaluating (1209) stress in the ligament from the comparison of the first and second measurements.

## Description

The present invention relates to a method and apparatus for monitoring stress in steel ligaments within a flexible pipe. In particular, but not exclusively, the present invention relates to a method and apparatus for monitoring stress in steel ligaments within a flexible pipe to evaluate a change in stress in a ligament and, optionally, a broken ligament.

Traditionally flexible pipes are utilised to transport production fluids, such as oil and/or gas and/or water, from one location to another. Flexible pipe is particularly useful in connecting a sub-sea location (which may be deep underwater) to a sea level location. The pipe may have an internal diameter of typically up to around 0.6 metres (e.g. diameters may range from 0.05 m up to 0.6 m). Flexible pipe is generally formed as an assembly of a flexible pipe body and one or more end fittings. The pipe body is typically formed as a combination of layered materials that form a pressure-containing conduit. The pipe structure allows large deflections without causing bending stresses that impair the pipe's functionality over its lifetime. The pipe body is generally built up as a combined structure including polymer, and/or metallic, and/or composite layers. For example, a pipe body may include polymer and metal layers, or polymer and composite layers, or polymer, metal and composite layers.

In many known flexible pipe designs, the pipe body includes one or more tensile armour layers. The primary loading on such a layer is tension. In high pressure applications, such as in deep and ultra deep-water environments, the tensile armour layer experiences high tension loads from a combination of the internal pressure end cap load and the self-supported weight of the flexible pipe. This can cause failure in the flexible pipe since such conditions are experienced over prolonged periods of time. Failure can lead to significant quantities of the production fluids (such as oil and/or gas) carried by the pipe leaking into the surrounding environment.

In known designs, the tensile armour layer may comprise a plurality of helically wound steel ligaments or wires. Failure in the flexible pipe may occur when one or more of the ligaments fails (i.e. breaks). However, these ligaments cannot be observed directly because they are generally enclosed by other layers within the flexible pipe.

Prior patent document WO 2014/096817 A1 describes a method of and apparatus for inspecting flexible risers to warn of failures in a tensile armour layer thereby mitigating the rise of catastrophic failure of a flexible pipe. The method includes using an electromagnetic probe to determine a parameter sensitive to stress in ligaments in a tensile armour layer and using variation of the parameter between different ligaments to detect if any ligaments have broken. The described method may be applied to a flexible pipe in situ. WO 2014/096817 A1 describes that measurements of the parameter sensitive to stress may be taken with different stresses in the riser by changing the pressure of the fluids within the riser. Taking measurements at two different pressures can assist in distinguishing between residual stresses and applied stresses in the ligaments. In some cases, the residual stresses may vary significantly between the different ligaments in each tensile armour layer which may complicate the detection of whether any ligaments have broken. An externally applied stress in the riser should change the stresses in all the wires or ligaments, but if a wire or ligament is broken then its stress will not be significantly altered by changes in the externally applied stress. As such, the presence of a broken wire or ligament may be detected from the observation that the measured stress in that broken wire or ligament is not altered by a change in the externally applied stress. However, changing the pressure in a riser is less than ideal as it requires the interruption of the transportation of production fluids through the riser. As such, the requirement to alter pressure within the flexible riser is onerous on the operator. In addition, some risers are often operated at low pressures and/or have limits of the safe operating pressures so there may be little scope to vary this pressure sufficiently to affect a detectable change in applied stress. Therefore, an improved method of inspecting and monitoring stress is a flexible pipe is desirable.

The present invention provides an improved method of and apparatus for monitoring stress in steel ligaments within a flexible pipe.

According to an aspect of the present invention there is provided a method for monitoring stress in steel ligaments within a flexible pipe. The method comprising:
subjecting a ligament to a first magnetic field and obtaining a first measurement indicative of a magnetic flux density near an outer surface of the pipe adjacent to the ligament;
subjecting the ligament to a second magnetic field and obtaining a second measurement indicative of the magnetic flux density near the outer surface of the pipe adjacent to the ligament;
comparing the first and second measurements; and
evaluating stress in the ligament from the comparison of the first and second measurements;
wherein the first magnetic field comprises an alternating magnetic field and wherein the second magnetic field comprises a combination of the alternating magnetic field and a static magnetic field.

The method provides an improved method for monitoring stress in a flexible pipe. The flexible pipe may be monitored using this method without affecting production or operation of the flexible pipe. Since the method relies of two different magnetic fields, rather than use of two different pressures, the method can be used on a greater variety of flexible pipes. For example, the method may be used to monitor stress in low-pressure production pipes or pipes where the pressure cannot be easily changed. Furthermore, since the first and second measurements may be made in succession the method may reduce inspection time by reducing the number of times the probe needs to be scanned around or along a flexible pipe.

The static magnetic field may have a magnitude greater than a magnitude of the alternating magnetic field.

In certain embodiments, comparing the first and second measurements may comprise: determining a parameter sensitive to stress from each of the first and second measurements; and comparing the parameter sensitive to stress from each of the first and second measurements. As such, the step of evaluating stress in the ligament from the comparison of the first and second measurements comprises evaluating stress in the ligament from the comparison of the parameter sensitive to stress from each of the first and second measurements.

In certain embodiments, comparing the parameter sensitive to stress from each of the first and second measurements may comprise subtracting the parameter sensitive to stress determined from one of the first and second measurements from the parameter sensitive to stress determined from the other measurement.

The method may comprise detecting whether the ligament is broken or differently loaded based on the comparison of the first and second measurements.

The method may comprise detecting whether the ligament is broken or differently loaded based on the comparison of the parameters sensitive to stress.

In certain embodiments, the first measurement and the second measurement may each comprise a plurality of measurements each made at a different frequency of the alternating magnetic field.

The method may comprise: subjecting each ligament of a plurality of ligaments to the first magnetic field and obtaining the first measurement for each ligament;
subjecting each ligament of a plurality of ligaments to the second magnetic field and obtaining the second measurement for each ligament;
comparing, for each ligament, the first and second measurements to; and
evaluating stress in each ligament from the comparison of the first and second measurements.

In certain embodiments, comparing, for each ligament, the first and second measurements may comprise: determining a parameter sensitive to stress from the first and second measurements for the ligament; and comparing the parameter sensitive to stress from the first and second measurements.

Both the first and second measurements for one ligament may be obtained prior to obtaining the first and second measurements for a subsequent ligament.

The method may comprise detecting if any of the ligaments are broken or differently loaded based on variation in comparison of the first and second measurements for the different ligaments.

The method may comprise detecting if any of the ligaments are broken or differently loaded based on variation in comparison of the parameters sensitive to stress for the different ligaments.

The method may comprise: providing an apparatus, the apparatus comprising:
a first electromagnet core defining two spaced part poles and a first drive coil wound around the first electromagnet core;
an alternating current source configured to supply alternating current to the first drive coil to generate the alternating magnetic field;
means for selectively producing a static magnetic field; and
sensors configured to sense magnetic flux density.
Wherein subjecting a ligament to a first magnetic field comprises supplying a current to the first drive coil from the alternating current source; and
wherein subjecting a ligament to the second magnetic field comprises supplying a current to the first drive coil from the alternating current source and producing the static magnetic field from the means for selectively producing a static magnetic field.

The method may comprise aligning the apparatus with a location by the outer surface of the pipe.

In certain embodiments, the means for selectively producing a static magnetic field may comprise a second drive coil and a constant current source configured to selectively supply a constant current to the second drive coil; and wherein subjecting the ligament to the second magnetic field may comprise supplying a current to the first drive coil from the alternating current source and supplying a current to the second drive coil from the constant current source.

The second drive coil may be wound around the first electromagnet core.

The means for selectively producing a static magnetic field may comprise at least one second electromagnet core and the second drive coil may be wound around the at least one second electromagnet core.

In certain embodiments, the means for selectively producing a static magnetic field may comprise a magnetic switchable device; and wherein subjecting the ligament to the second magnetic field may comprise supplying a current to the first drive coil from the alternating current source and switching on the magnetic switchable device.

In certain embodiments, the means for selectively producing a static magnetic field may comprise a constant current source configured to selectively supply a constant current to the first drive coil; and wherein subjecting the ligament to the second magnetic field may comprise supplying a current to the first drive coil from the alternating current source and from the constant current source.

Repeating the first and second measurements for each of the plurality of ligaments may comprise aligning the apparatus with different locations on the outer surface of the pipe.

In certain embodiments, the magnetic flux density of the static magnetic field may be at least 400 mT at the ligament.

In certain embodiments, the magnetic flux density of the alternating magnetic field may be at least 10 mT at the ligament.

According to an aspect of the invention, there is provided an apparatus for monitoring stress in steel ligaments within a flexible pipe. The apparatus comprising:
a first electromagnet core defining two spaced part poles and a first drive coil wound around the first electromagnet core;
an alternating current source configured to supply alternating current to the first drive coil to generate an alternating magnetic field;
a static magnetic field production means configured to selectively produce a static magnetic field that overlaps with the alternating magnetic field; and
sensors configured to sense magnetic flux density in response to the alternating and static magnetic fields.

The first electromagnet core and the static magnetic field production means may be arranged such that the alternating magnetic field and the static magnetic field overlap during use.

The static magnetic field production means may comprise at least one second drive coil and a constant current source configured to selectively supply a constant current to the second drive coil.

In certain embodiments, at least one second drive coil may be wound around the first electromagnet core.

The first electromagnet core may comprise two legs, each leg defining one of the spaced apart poles. Each leg may comprise a plurality of fingers and at least one second drive coil is wound around each of the plurality of fingers.

The first electromagnet core may comprise a bridge extending between the two legs. The first drive coil may be wound around the bridge.

In certain embodiments, the static magnetic field production means may comprise a second electromagnet core defining two spaced part poles. The at least one second drive coil may be wound around the at least one second electromagnet core.

The first electromagnet core may reside between the poles of the second electromagnet core.

The first electromagnet core and the second electromagnet core may be orientated such that a direction of the alternating magnetic field is perpendicular to the direction of the static magnetic field.

In certain embodiments, the static magnetic field production means may comprise two second electromagnet cores. At least one second drive coil may be wound around each of the second electromagnet cores. Optionally, the two second electromagnet cores may be arranged so that a pole of the two second electromagnet cores is adjacent to a corner of the poles of the first electromagnetic core.

The first electromagnet core may reside between the poles of the two second electromagnet cores.

The first electromagnet core and the two second electromagnet cores may be orientated such that a direction of the alternating magnetic field is perpendicular to the direction of the static magnetic field.

In certain embodiments, the at least one second drive coil may be configured to be wound around the flexible pipe.

In certain embodiments, the static magnetic field production means may comprise a magnetic switchable device.

The magnetic switchable device may be connected to a magnetisable core that defines two spaced apart poles.

The first electromagnet core may reside between the poles of the magnetisable core.

The first electromagnet core and the magnetisable core may be orientated such that a direction of the alternating magnetic field is perpendicular to the direction of the static magnetic field.

In certain embodiments, the static magnetic field production means may comprise a constant current source configured to selectively supply a constant current to the first drive coil to generate the static magnetic field.

Whilst the method and apparatus of the present invention are for monitoring stress in steel ligaments within a flexible pipe, alternatively, the above-described method and apparatus may be used to monitor stress in other objects. For example, the method and apparatus may be used for monitoring stress in an article comprising steel or another magnetisable material. Therefore, the method may comprise:
subjecting the article to a first magnetic field and obtaining a first measurement indicative of a magnetic flux density near an outer surface of the article;
subjecting the article to a second magnetic field and obtaining a second measurement indicative of the magnetic flux density near the outer surface of the article;
comparing the first and second measurements; and
evaluating stress in the article from the comparison of the first and second measurements;
wherein the first magnetic field comprises an alternating magnetic field and wherein the second magnetic field comprises the alternating magnetic and a static magnetic field.

Each of the above-description optional features of the method for monitoring stress in steel ligaments within a flexible pipe may apply when the method is used for monitoring stress in an article comprising steel or another magnetisable material. For example, the static magnetic field may have a magnitude greater than a magnitude of the alternating magnetic field. In certain embodiments, comparing the first and second measurements may comprise: determining a parameter sensitive to stress from each of the first and second measurements; and comparing the parameter sensitive to stress from each of the first and second measurements.

### DESCRIPTION OF FIGURES

Embodiments of the invention are further described hereinafter with reference to the accompanying drawings, in which:
Figure 1 schematically illustrates a perspective cut-away view of a flexible pipe;
Figure 2 schematically illustrates a riser assembly suitable for transporting production fluid;
Figure 3 schematically illustrates an exploded view of a part of an apparatus for monitoring a flexible pipe;
Figure 4 schematically illustrates a part of an apparatus for monitoring a flexible pipe;
Figure 5 schematically illustrates an exploded view of an apparatus for monitoring a flexible pipe;
Figure 6 schematically illustrates a part of an apparatus for monitoring a flexible pipe;
Figure 7 schematically illustrates a part of an apparatus for monitoring a flexible pipe;
Figure 8 schematically illustrates a perspective view of an apparatus for monitoring a flexible pipe;
Figure 9 schematically illustrates a perspective view of an apparatus for monitoring a flexible pipe;
Figure 10 schematically illustrates a plan view of the apparatus of Figure 9;
Figure 11 schematically illustrates a side view of an apparatus for monitoring a flexible pipe;
Figure 12 shows a method for monitoring a flexible pipe;
Figure 13 shows a diagrammatic plan view of the probe of Figure 2 in use for inspecting a flexible pipe;
Figure 14 shows an example of the results from monitoring a pipe using the method of Figure 12;
Figure 15 shows a side view of the probe of Figure 2 in use for inspecting a flexible pipe;
Figure 16 shows a perspective view of an alternative scanning mechanism for use with the probe of Figure 2; and
Figure 17 shows a sectional view of the scanning mechanism of Figure 16.

### DETAILED DESCRIPTION

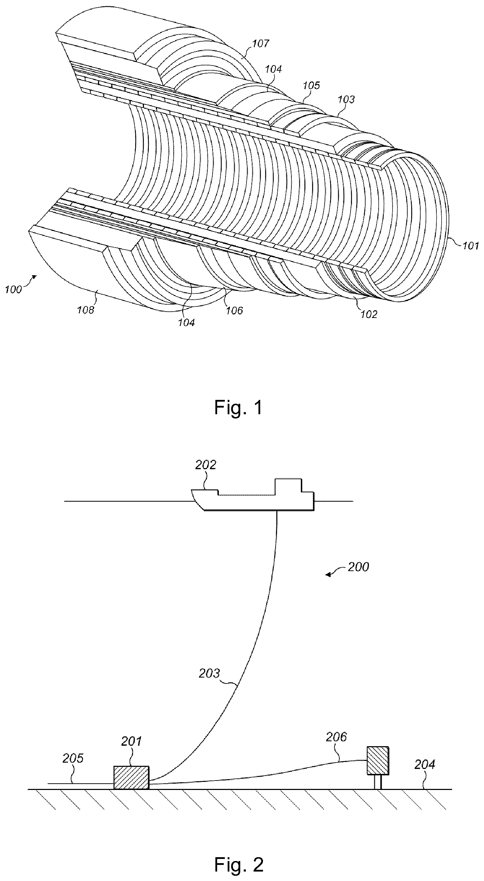

Throughout this description, reference will be made to a flexible pipe. It will be understood that a flexible pipe is an assembly of a portion of pipe body and one or more end fittings in each of which a respective end of the pipe body is terminated. Figure 1 illustrates how pipe body 100 is formed in accordance with an embodiment from a combination of layered materials that form a pressure-containing conduit. Although a number of particular layers are illustrated in Figure 1, it is to be understood that the pipe body is broadly applicable to coaxial structures including two or more layers manufactured from a variety of possible materials. For example, the pipe body may be formed from polymer layers, metallic layers, composite layers, or a combination of different materials. It is to be further noted that the layer thicknesses are shown for illustrative purposes only. As used herein, the term "composite" is used to broadly refer to a material that is formed from two or more different materials, for example a material formed from a matrix material and reinforcement fibres.

As illustrated in Figure 1, a pipe body includes an optional innermost carcass layer 101. The carcass provides an interlocked construction that can be used as the innermost layer to prevent, totally or partially, collapse of an internal pressure sheath 102 due to pipe decompression, external pressure, and tensile armour pressure and mechanical crushing loads. The carcass layer is often a metallic layer, formed from stainless steel, for example. The carcass layer could also be formed from composite, polymer, or other material, or a combination of materials. It will be appreciated that certain embodiments are applicable to 'smooth bore' operations (i.e. without a carcass layer) as well as such 'rough bore' applications (with a carcass layer).

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised the internal pressure sheath is often referred to by those skilled in the art as a barrier layer. In operation without such a carcass (so-called smooth bore operation) the internal pressure sheath may be referred to as a liner.

An optional pressure armour layer 103 is a structural layer that increases the resistance of the flexible pipe to internal and external pressure and mechanical crushing loads. The layer also structurally supports the internal pressure sheath, and typically may be formed from an interlocked construction of wires wound with a lay angle close to 90°. The pressure armour layer is often a metallic layer, formed from carbon steel, for example. The pressure armour layer could also be formed from composite, polymer, or other material, or a combination of materials.

The flexible pipe body 100 also includes a first tensile armour layer 105 and an optional second tensile armour layer 106. Each tensile armour layer is used to sustain tensile loads and internal pressure. The tensile armour layer is formed from a plurality of ligaments (i.e. wires) to impart strength to the layer. The ligaments are located over an inner layer and are helically wound along the length of the pipe at a lay angle typically between about 10° to 55°. The tensile armour layers are often counter wound in pairs. Each tensile armour layer may comprise of a single layer of ligaments. The ligaments may be steel. The ligaments may be ferritic steel.

The steel ligaments within each tensile armour layer 105 and 106 may be wound side-by-side. There may be narrow gaps between adjacent wires within each tensile armour layer 105, 106 such gaps may ensure the flexibility of the pipe body 100. There may be, for example, 5 mm wide gaps between adjacent ligaments in each layer 105, 106, although the gaps between adjacent ligaments may not be of constant or consistent width as the pipe body 100 flexes. In non-limiting examples of a flexible pipe body, each ligament may have a width 12 mm and a thickness 5 mm. The ligaments may be covered by a layer of polymer that may be 12 mm or 20 mm thick.

The flexible pipe body 100 shown in Figure 1 also includes optional layers of tape 104 which help contain underlying layers and to some extent prevent abrasion between adjacent layers. The tape layer may be a polymer or composite or a combination of materials.

The flexible pipe body 100 may also typically include optional layers of insulation 107 and an outer sheath 108, which comprises a polymer layer used to protect the pipe against penetration of seawater and other external environments, corrosion, abrasion and mechanical damage.

Each flexible pipe comprises at least one portion, sometimes referred to as a segment or section of pipe body 100 together with an end fitting located at least one end of the flexible pipe. An end fitting provides a mechanical device which forms the transition between the flexible pipe body and a connector. The different pipe layers as shown, for example, in

Figure 1 are terminated in the end fitting in such a way as to transfer the load between the flexible pipe and the connector.

Figure 2 illustrates a riser assembly 200 suitable for transporting production fluid such as oil and/or gas and/or water from a sub-sea location 201 to a floating facility. For example, in Figure 2 the sub-sea location 201 includes a sub-sea flow line. The flexible flow line 205 comprises a flexible pipe, wholly or in part, resting on the sea floor 204 or buried below the sea floor and used in a static application. The floating facility may be provided by a platform and/or buoy or, as illustrated in Figure 2, a ship 200. The riser assembly 200 is provided as a flexible riser, that is to say a flexible pipe 203 connecting the ship to the sea floor installation. The flexible pipe may be in segments of flexible pipe body with connecting end fittings. The flexible pipe of Figure 2 may comprise the flexible pipe body 100 shown in Figure 1. Figure 2 also illustrates how portions of flexible pipe can be utilised as a flow line 205 or jumper 206.

It will be appreciated that there are different types of riser, as is well-known by those skilled in the art. Embodiments may be used with any type of riser, such as a freely suspended (free, catenary riser), a riser restrained to some extent (buoys, chains), totally restrained riser or enclosed in a tube (I or J tubes).

The present invention concerns an apparatus for and method of monitoring stress in ligaments within a flexible pipe 20. The flexible pipe 20 may be substantially the same as that described for Figures 1 and 2. Therefore, the flexible pipe 20 may comprise ligaments within a first tensile armour layer 105 and within a second tensile armour layer 106. Embodiments of the apparatus will be described with reference to Figures 1 to 11.

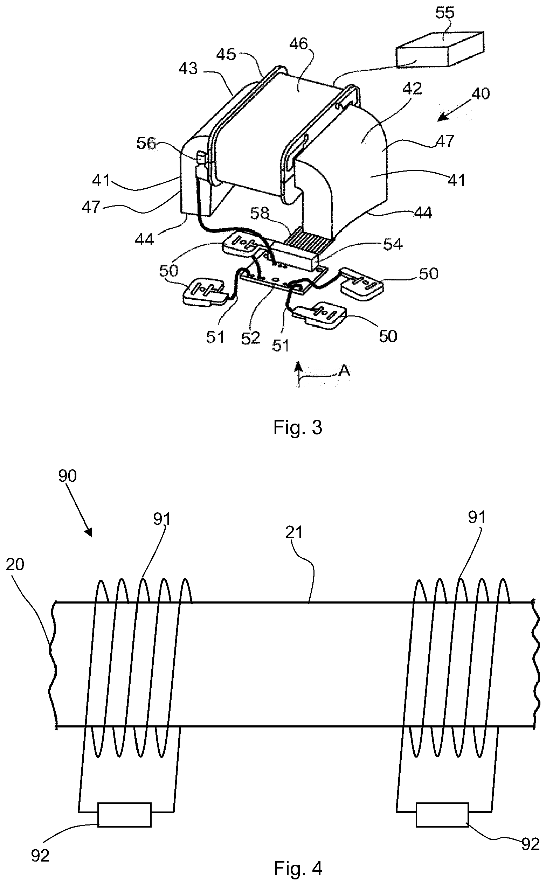

According to an embodiment of the invention, the apparatus comprises a first electromagnet core defining two spaced part poles and a first drive coil wound around the electromagnet core. As shown in the embodiment in Figure 3, the apparatus may comprise a probe 40. The probe may comprise the first electromagnet core 42 and the first drive coil 46.

As shown in the embodiment in Figure 3, the first electromagnet core 42 may comprise a U-core or C-core (i.e. the core is U or C shaped). As such, the core comprises two legs 41 connected by a bridge 43. The two legs 41 may be substantially parallel to each other. The first electromagnet core 42 may comprise any suitable material. Non-limiting examples of such materials include laminated high-permeability silicon-iron alloy, ferrite, iron or alloy powders, or amorphous metals.

The first electromagnet core 42 defines two poles 47 whose pole faces 44 are separated by a gap (i.e. spaced apart). As shown in the embodiment in Figure 3, the spaced apart poles 47 may be provided by the legs 41 of the first electromagnet core 42. In certain non-limiting examples, the gap between the pole faces 44 may be about 60 mm wide, and each pole face 44 may have a width of 60 mm and of thickness 18 mm.

During use of the apparatus, the probe 40 may be placed on an outer surface 21 of a flexible pipe 20. As such, each pole face 44 of the first electromagnet core 42 may be slightly curved to conform to the outer surface 21 of the flexible pipe 20.

As described above, the first drive coil 46 is wound around the first electromagnet core 42. As shown in the embodiment in Figure 3, the first drive coil 46 may be wound around the bridge 43 of the first electromagnet core 42. The probe 40 may comprise a former 45 on which the first drive coil 46 is wound. The former 45 may be arranged on the bridge 43 of the first electromagnet core 42.

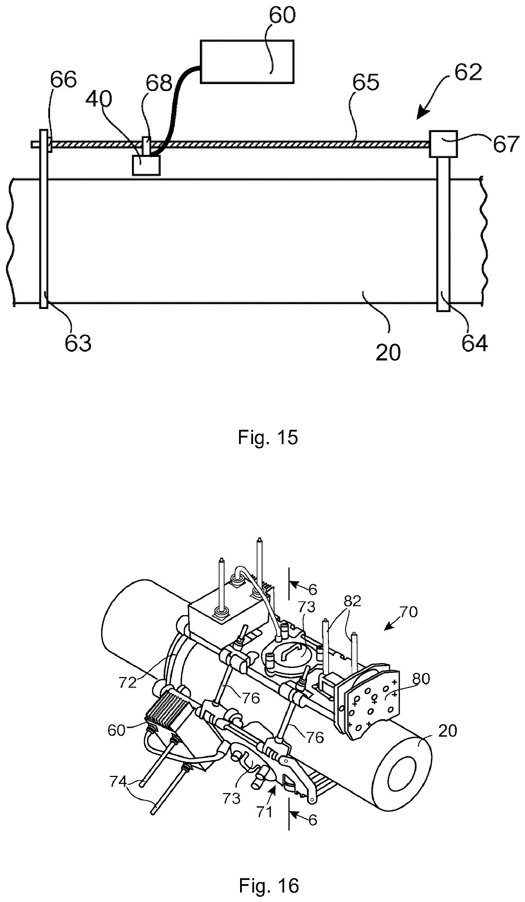

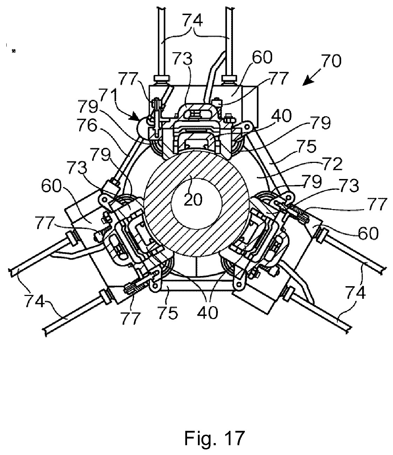

The apparatus comprises an alternating current source 55. The alternative current source 55 is configured to supply alternating (e.g. sinusoidal) current to the first drive coil 46 to generate an alternating magnetic field. The probe 40 may comprise the alternating current source 55. In certain embodiments, the probe may comprise a control unit 60 (shown in Figures 16 and 17) and the alternating current source 55 may be located in a control unit 60. The control unit 60 may comprise control circuitry (not shown) configured to control the alternating current source 55. The alternating current source 55 may be configured to provide a current of a desired frequency and amplitude to the first drive coil 46 so that the alternating magnetic field in at the ligaments within the flexible pipe 20 oscillates with an amplitude less than saturation. The alternating current source 55 may be arranged to supply a plurality of different frequencies in succession. The alternating current source 55 may be configured to supply frequencies between, for example, 20 Hz and 4000 Hz. The control circuitry may be configured to control the magnitude and frequency of the current supplied by the alternating current source 55. The control circuitry may be configured to turn the alternating current source 55 on and off.

The apparatus comprises sensors 50 configured to sense magnetic flux density. The sensors 50 are configured to sense magnetic flux density in response to at least the alternative magnetic field.

As shown in the embodiment in Figure 3, the probe 40 may comprise the sensors 50. The sensors 50 may comprise sensor coils. Therefore, the sensors 50 sense magnetic flux density via a voltage induced in the coil of the sensor 50. Each sensor coil may comprise a coil wound around a former. As shown in the embodiment in Figure 3, the former of the sensor coils may be substantially square. Each side of the square former may have a length of 17 mm. In the non-limiting embodiment shown in Figure 3, the apparatus comprises four sensors 50. However, in alternative embodiments the apparatus may comprise one or more sensors 50.

Each sensor 50 may be connected by a wire 51 to a printed circuit board 52. The printed circuit board 52 may comprise a head amplifier 54 to amplify measurements taken by the sensors 50. The probe 40 may also include a temperature sensor 56 connected to the printed circuit board 52. The probe 40 may comprise a flexible multi-wire strip 58 configured to carry output signals from the head amplifier 54 to a signal analysis unit (not shown). The signal analysis unit may be in a control unit 60 as shown in Figures 15 and 17.

In the exploded view of Figure 3, the sensors 50 are shown as separated from the first electromagnet core 42. However, in the assembled probe 40 the sensors 50 may be positioned on the pole faces 44 of the first electromagnet core 42. As such, during use, the sensors 50 may be positioned between the pole faces 44 and the flexible pipe 20. Two sensors 50 may be attached on each pole face 44. In certain embodiments, the sensors 50 may be positioned near or at the corners of the poles 47. The sensors 50 may be fixed by adhesive to the first electromagnet core 42 or the sensors 50 may be secured within a frame that is fixed to the first electromagnet core 42. In alternative embodiments, the sensors 50 may be positioned within the gap between the poles 47 of the first electromagnet core 42. In such embodiments, the sensors 50 may be adjacent to but not on (i.e. contiguous with) the pole faces 44 or poles 47. The sensors 50 may be positioned adjacent to the corners of the poles 47.

Each sensor 50 may be substantially flat to reduce the space occupied by the sensors 50 in the probe 40. In particular, when the sensors 50 are on the pole faces 44 this may reduce the distance between the pole faces 44 and the outer surface 21 of the flexible pipe 20 during use as shown in Figure 17. In certain embodiments, the sensors 50 may be curved to conform to the outer surface 21 of a flexible pipe 20.

The sensors 50 may be sufficiently small that if the probe 40 is suitably oriented each one of the sensors 50 is sensitive to a different ligament within the flexible pipe 20. Therefore, the properties of the separate ligaments can be distinguished, and can be measured simultaneously.

The apparatus comprises a static magnetic field production means. That is, the apparatus comprises means for selectively producing a static magnetic field. The static magnetic field production means is configured to selectively produce a static magnetic field that overlaps with the alternating magnetic field during use. Therefore, the ligaments in the flexible pipe 20 may be selectively subjected to a magnetic flux from the static magnetic field. In the apparatus, the first electromagnet core 46 and the static magnetic field production means may be arranged (i.e. positioned) such that the alternating magnetic field and the static magnetic fields overlap at a ligament within the flexible pipe during use. Thus, the alternating magnetic field and the static magnetic fields overlap at least at a location outside of the apparatus. The sensors 50 are configured to sense magnetic flux density in response to both the alternating and static magnetic fields. During use, signals from the sensors 50 will be affected by the response of the ligaments to the alternating and static magnetic fields.

The apparatus may be configured such that the static magnetic field has a magnitude greater than a magnitude of the alternating magnetic field. Therefore, in certain embodiments, the static magnetic field production means may selectively produce a static magnetic field that is stronger than the alternating magnetic field in the flexible pipe 20 during use. In certain embodiments, the magnetic flux density of the static magnetic field may be significantly greater than that of the alternative magnetic field at the ligaments. In certain embodiments, the magnitude of the magnetic flux density of the static magnetic field may be at least 400 mT at the ligament. The magnitude of the magnetic flux density of the alternating magnetic field may be at least 10 mT at the ligaments.

It will be apparent from the following description that means for producing the static magnetic field may be provided in various different ways.

In an embodiment, the apparatus may comprise two separate parts: a first part and a second part. The first part of apparatus may comprise the probe 40 of the embodiment shown in Figure 3. The second part of the apparatus may comprise the static magnetic field production means as shown in the embodiment in Figure 4.

As shown in Figure 4, the static magnetic field production 90 means may comprise one or more second drive coils 91 connected to a constant current source 92. The constant current source 92 is configured to selectively supply a constant current to the second drive coil 91 to generate the static magnetic field. As such, a static magnetic field may be selectively produced by turning the current on and off. The one or more second drive coils 91 are configured to be wound around the flexible pipe 20. The second drive coils 92 may be wound directly onto the outer surface 21 of the flexible pipe 90.

In the embodiment shown in Figure 4, apparatus comprises two second drive coils 91 wound around the flexible pipe 20 so that the coils are spaced apart (i.e. separated) from each other. During use, the probe 40 may be arranged on or attached to the outer surface 21 of the flexible pipe 20 between the two second drive coils 91. Thus, the ligaments in the pipe may be subjected to both the alternating and static magnetic fields. Providing two second drive coils 91 and arranging these coils as shown in Figure 4 allows the alternating and static magnetic fields to overlap in the flexible pipe 20. Additionally, the arrangement shown in Figure 4 may improve the uniformity of the static magnetic field in the flexible pipe 20 beneath a probe 40. As shown in Figure 4, each second drive coil 91 may be connected to a separate constant current source 92. However, in alternative embodiments, the two second drive coils 91 may be connected to the same constant current source 92.

Providing the static magnetic field production means 90 by winding coils around a flexible pipe 20 may not always be appropriate due to the surrounding environment of the flexible pipe 20 to be monitored. For example, in offshore applications producing the static magnetic field by this means may not be appropriate. As such, the static magnetic field may be provided by alternative means as described in the following embodiments. In each of these embodiments, the apparatus may comprise a probe and the probe may comprise the static magnetic field production means.

In an embodiment, the probe 40 of the embodiment shown in Figure 3 may be modified to include the static magnetic field production means. For example, the first drive coil 46 of the probe 40 may also be configured to produce the static magnetic field. As such, the probe 40 comprises the static magnetic field production means. This may require a larger coil to be used compared to embodiments in which the first drive coil 46 is only used to generate the alternative magnetic field. In such embodiments, the probe may also comprise a constant current source (not shown) coupled to the first drive coil 46. The constant current source may be configured to selectively supply a constant current to the first drive coil 46 to generate the static magnetic field. The first drive coil may therefore receive current from the alternating current source and the constant current source. As such, the first drive coil produces both the alternating magnetic field and the static magnetic field and the first electromagnet core 42 is used in the production of both the alternating and the static magnetic fields. Therefore, the alternating and static magnetic fields will overlap in the flexible pipe 20 during use.

The constant current source may be located in a control unit 60, shown in Figures 15 and 17, of the probe 40. The control circuitry of the control unit may be configured to control the constant current source. The control circuitry may be configured to turn the constant current source on and off. Since the first electromagnet core 42 is used in the production of both the alternating and the static magnetic fields, the control circuitry may be configured control both the alternating current source and the constant current source to reduce unwanted interference or cancellation of the alternating and static magnetic fields. The control circuitry may therefore be configured to control the alternating current source and the constant current source so that the first drive coil is supplied with a single current comprising of both alternating current (AC) and direct current (DC) components. The electromagnet core 42 may then generate both the alternating and static magnetic fields.

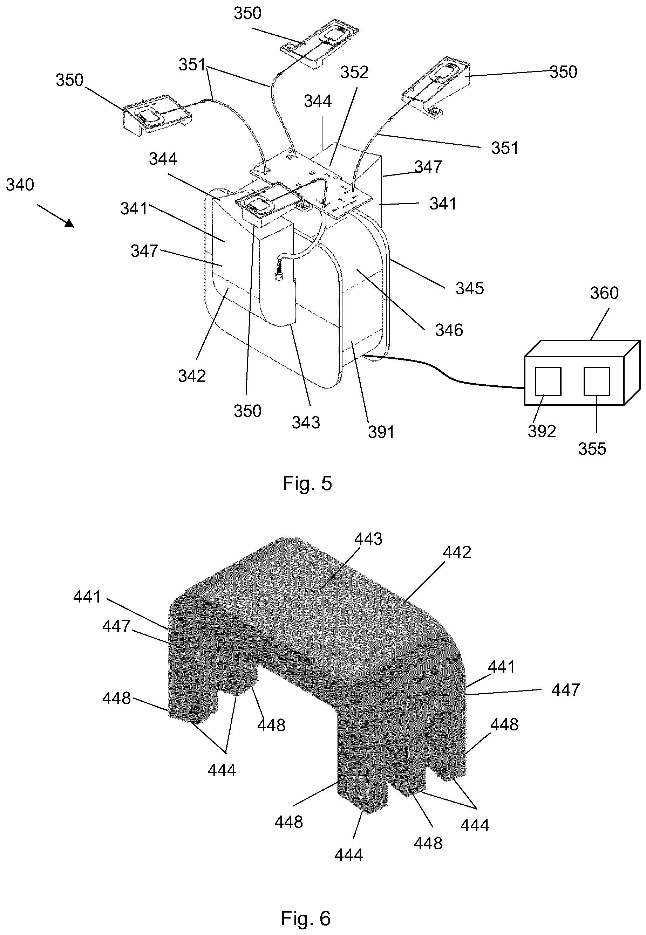

Figure 5 shows an alternative embodiment of the apparatus where a probe 340 comprises the static magnetic field production means. As shown in Figure 5, the apparatus may comprise a probe 340. The probe 340 in Figure 5 includes all features present in the probe 40 described above for the embodiment shown in Figure 3. Reference numerals in Figure 5 correspond to those used in Figure 3 for like features but are transposed by 300.

The probe 340 of the embodiment shown in Figure 5 additionally comprises a second drive coil 390 wound around the first electromagnet core 342. The first and second drive coils 346, 391 may be co-wound around the first electromagnet core 342. Therefore, the first electromagnet core 342 is used in the production of both the alternating and the static magnetic fields. As shown in the embodiment in Figure 5, the first and second drive coils 346, 390 may be arranged around a bridge 343 of the first electromagnet core 342. Both the first and second drive coils 346, 390 may be wound around a former 345.

The apparatus comprises a constant current source 392. The constant current source 392 is connected to the second drive coil 391. In the same manner as described above for the embodiment shown in Figure 4, the constant current source 392 is configured to selectively supply a constant current to the second drive coil 391 to generate the static magnetic field. Therefore, the second drive coil 391 and the constant current source 392 provide the static magnetic field production means. Since the first electromagnet core 342 is used in the production of both the alternating and the static magnetic fields, the alternating and static magnetic fields will overlap in the flexible pipe 20 during use. In the embodiment shown in Figure 5, the arrangement of the first and second drive coils 364, 391 on the first electromagnet core 342 results in the alternating and static magnetic fields being parallel to each other.

In the embodiment shown in Figure 5, the alternating current source 355 and the constant current source 392 may be positioned within a control unit 360. The control unit 360 may comprise control circuity (not shown). The control circuitry may be configured to control the alternating and constant current sources 355, 392 in the same was as described for the embodiment in Figure 3 and the embodiment where the first drive coil is connected to a constant current source.

The second drive coil 392 may comprise a greater number of turns than the first drive coil 346 so that the static magnetic field has a magnitude greater than the alternating magnetic field. As such, the former 345 in the embodiment shown in Figure 5 may be larger than the former 45 of the embodiment shown in Figure 3 which only has the first drive coil 46 wound around it. The probe 340 of the embodiment shown in Figure 5 may therefore have a greater size than the probe of the embodiment in Figure 3.

In the embodiment shown in Figure 5, the first and second drive coils 346, 391 are both wound around the bridge 343 of the first electromagnet core 342. Figure 6 shows an alternative embodiment of the first electromagnet core 442 about which first and second drive coils may be wound.

The first electromagnet core 442 defines two poles 447 whose pole faces 444 are separated by a gap. The pole faces 444 may be curved to conform with an outer surface of a flexible pipe during use. As shown in Figure 6, the first electromagnet core 442 is a U-core or C-core. Therefore, the core comprises two legs 441 connected by a bridge 443. The ends of each leg 441 (i.e. the part of the leg furthest from the bridge 443) of the core 442 comprises a plurality of fingers 448. Each finger 448 is spaced apart from an adjacent finger 448. The end of each finger 448 defines part of the poles faces 444 of each leg 441. In the embodiment shown in Figure 6, each leg 441 of the core 442 comprise three fingers 448. However, in alternative embodiments each leg 441 of the core 442 may comprise two or more fingers 448.

The first electromagnet core 442 may be incorporated within a probe. For example, the first electromagnet core 342 of the embodiment shown in Figure 5 may be replaced by the first electromagnet core 442 shown in Figure 6 without modifying the sensors 350 or the control unit 360.

When the first electromagnet core 442 is within the probe, a first drive coil may be wound around the bridge of the first electromagnet core 442. In a similar manner to the above-described embodiments, the first drive coil may be wound around a former. The first drive coil is connected to an alternating current source.

A second drive coil may be wound around one or more of the fingers 448 of the first electromagnet core 442. In certain embodiments, a second drive coil may be wound around each of the fingers of the first electromagnet core 442. As such, when the core shown in Figure 6 is used within a probe, the probe may comprise six second drive coils. Each of the second drive coils may be connected to a constant current source. Each of the second drive coils may be connected to the same or to separate constant current sources.

The first electromagnet core 442 shown in Figure 6 therefore provides an alternative arrangement by which the first electromagnet core may be used in the production of both the alternating and the static magnetic fields. Since the first electromagnet core 442 is used in the production of both the alternating and the static magnetic fields, the alternating and static magnetic fields will overlap in the flexible pipe 20 during use. In the embodiment shown in Figure 6, the shape of the first electromagnetic core 442 and arrangement of the first and second drive coils (not shown) results in the alternating and static magnetic fields being perpendicular to each other.

Providing a probe having the first electromagnet core 442 shown in Figure 6, and corresponding first and second drive coils, may enable the size of the apparatus to be reduced compared to alternative embodiments of the invention, such as that shown in Figure 5.

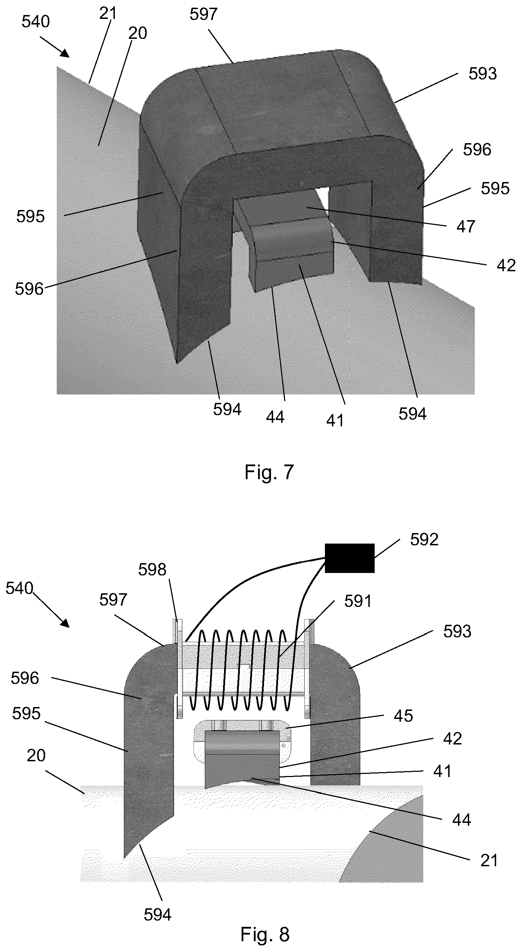

Figures 7 and 8 show an alternative embodiment where a probe 540 comprises the static magnetic field production means. The probe 540 includes the probe 40 of the embodiment shown in Figure 3. However, for simplicity, not all features of the probe 40 of the embodiment of Figure 3 are repeated in Figures 7 and 8. Figure 7 shows only the first electromagnet core of the probe 40. Figure 8 does not show the sensors 50, printed circuit board 52, alternating current source 55, control unit 60 or the first drive coil 46 of the probe 40, however, these features would be included in the probe 540.

The probe 540 comprises a second electromagnet core. As shown in Figure 8, the second electromagnet core 593 may be added to the probe 40 of the embodiment shown in Figure 3. Figures 7 and 8 show the first and second electromagnet cores 42, 593 on an outer surface 21 of a flexible pipe 20.

The second electromagnet core 593 defines two spaced apart poles 595. As shown in Figures 7 and 8, the second electromagnet core 593 may comprise a U-core or C-core (i.e. the core is U-shaped). Thus, the second electromagnet core 593 may comprises two legs 596 connected by a bridge 597. The two legs 596 may be substantially parallel to each other. The second electromagnet core 593 may comprise any suitable material. Non-limiting examples of such materials include laminated high-permeability silicon-iron alloy, ferrite, iron or alloy powders, or amorphous metals.

As shown in the embodiment in Figure 7, the spaced apart poles 595 may be provided by the legs 596 of the second electromagnet core 593. Each pole 595 has a corresponding pole face 594. The pole faces 594 may be slightly curved to conform to the outer surface 21 of the flexible pipe 20. In Figure 8, a part of one of the legs 596 of the second electromagnet core 593 is hidden by the flexible pipe 20.

A second drive coil 591 is wound around the second electromagnet core 593 as shown in Figure 8. The second drive coil 591 in the Figure 8 is not shown to scale. The probe 540 may comprise a former 598 on which the second drive coil 591 is wound. The former 598 may be arranged on the bridge 597 of the second electromagnet core 593.

In the same manner as the above-described embodiments, the probe comprises a constant current source 592 connected to the second drive coil 591. The constant current source 592 is configured to selectively supply a constant current to the second drive coil 591 to generate the static magnetic field. The constant current source 592 may be included in the control unit 60 and controlled by control circuitry of the control unit 60 as described above for the other embodiments. The second electromagnet core 593, the second drive coil 591 and the constant current source 592 provide the static magnetic field production means.

As shown in Figures 7 and 8, the second electromagnet core 593 is larger than the first electromagnet core 42. Therefore, the first electromagnet core 42 may reside between the two poles of the second electromagnet core 593. As such, the alternating and static magnetic fields will overlap in the flexible pipe 20 during use. The size of the second electromagnet core 593 may also improve the ease of providing the static magnetic field with a greater magnitude than the alternating magnetic field.

The first and second electromagnet cores 42, 593 may be orientated or arranged such that a direction of the alternative magnetic field is perpendicular to the direction of the static magnetic field. As shown in the embodiment in Figures 7 and 8, this may be achieved arranging the first and second electromagnetic cores 42, 593 so that a direction from one leg 41 to the other leg 41 of the first electromagnetic core 42 is perpendicular to a direction from one leg 596 to the other leg 596 of the second electromagnetic core 593.

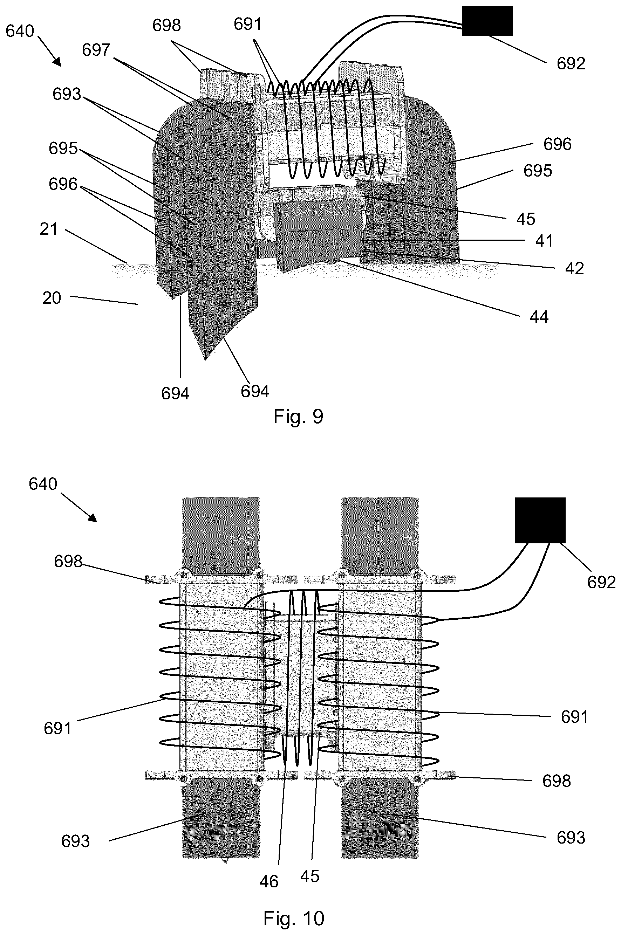

Figures 9 and 10 show an alternative embodiment where a probe 640 comprises the static magnetic field production means. As shown in Figures 9 and 10, the probe 640 includes the probe 40 of the embodiment shown in Figure 3. For simplicity, not all features of the probe of Figure 3 are repeated in Figures 9 and 10. Figures 9 and 10 do not show the sensors 50, printed circuit board 52, alternating current source 55 or control unit 60, however, these features would be included in the probe 640.

As shown in Figures 9 and 10, the probe 640 may comprise two second electromagnet cores 693. Figure 9 shows the first and second electromagnet cores 42, 693 on an outer surface of a flexible pipe.

Each of the two second electromagnet core 693 defines two spaced apart poles 695. As shown in Figures 9 and 10, each second electromagnet core 693 may comprise a U-core or C-core (i.e. the core is U-shaped). Thus, each second electromagnet core 693 may comprises two legs 696 connected by a bridge 697. The two legs 696 may be substantially parallel to each other. Each second electromagnet core 693 may comprise any suitable material. Non-limiting examples of such materials include laminated high-permeability silicon-iron alloy, ferrite, iron or alloy powders, or amorphous metals.

As shown in the embodiment in Figures 9 and 10, the spaced apart poles 695 may be provided by the legs 696 of each second electromagnet core 693. Each pole 695 has a corresponding pole face 694. The pole faces 694 may be slightly curved to conform to the outer surface 21 of the flexible pipe 20. In Figure 9, a part of one of the legs 696 of each second electromagnet core 693 is hidden by the flexible pipe 20.

A second drive coil 691 is wound around each of the two second electromagnet cores 693 as shown in Figures 9 and 10. The coils 691 in the Figures 9 and 10 are not shown to scale. The second drive coils 691 may be wound around the bridge 687 of each of the second electromagnet cores 693. The probe 640 may comprise a former 698 on each of the second electromagnet cores 693 on which the second drive coils 691 are wound.

In the same manner as the above-described embodiments, the probe 640 comprises a constant current source 692 connected to both of the second drive coils 691. The constant current source 692 is configured to selectively supply a constant current to each of the second drive coils 691 to generate the static magnetic field. In an alternative embodiment to that shown in Figures 9 and 10, each of the two second drive coils may be connected to a separate constant current source. The constant current source 692 may be included in the control unit 60 and controlled by control circuitry of the control unit 60 as described above for the other embodiments. The two second electromagnet cores 693, the second drive coils 691 and the constant current source 692 provide the static magnetic field production means.

As shown in Figures 9 and 10, the two second electromagnet cores 693 are larger than the first electromagnet core 42. Therefore, the first electromagnet core 42 may reside between the two poles of the two second electromagnet cores 693. As such, the alternating and static magnetic fields will overlap in the flexible pipe 20 during use. The size of the two second electromagnet cores 693 may also improve the ease of providing the static magnetic field with a greater magnitude than the alternating magnetic field.

In the same was as described for the embodiment shown in Figures 7 and 8, the first and second electromagnet cores 42, 692 may be orientated or arranged such that a direction of the alternative magnetic field is perpendicular to the direction of the static magnetic field.

In alternative embodiments where the probe comprises the means for producing a static magnetic field, said means may comprise a magnetic switchable device.

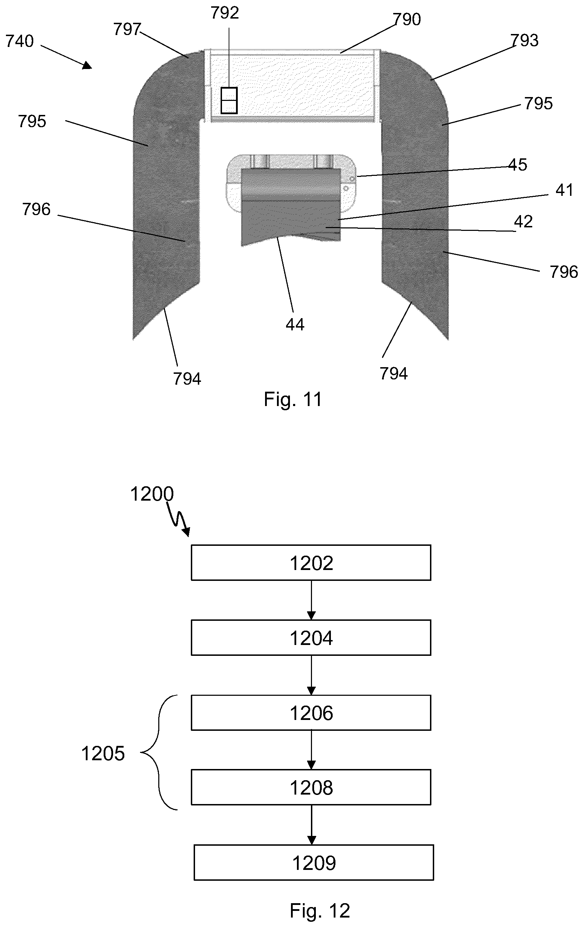

Figure 11 shows an alternative embodiment where a probe 740 comprises the static magnetic field production means. As shown in Figure 11, the probe 740 includes the probe 40 of the embodiment shown in Figure 3. For simplicity, not all features of the probe of Figure 3 are repeated in Figure 11. Figure 11 does not show the sensors, printed circuit board, alternating current means or the first drive coil, however, these features would be included in the probe 740.

In the probe 740 shown in Figure 11, the static magnetic field production means comprises a magnetic switchable device 790.

The magnetic switchable device 790 comprises one or more permanent magnets. The magnetic switchable device 790 is configured so that the magnetic field external to the device 790 can be switched on and off. The magnetic switchable device 790 may achieve this by comprising a block of non-ferrous material sandwiched between two blocks of ferrous or magnetisable material. The non-limiting examples of the non-ferrous material include aluminium and non-limiting examples of the ferrous or magnetisable material may comprise iron. The device 790 may comprise a bore extending therethrough. The bore extends partially through the two blocks of ferrous material and through the non-ferrous material. The bore may extend in a direction substantially a parallel to the interfaces between the blocks of ferrous and non-ferrous material. A diametric magnet or diametrically magnetised magnet is received within the bore. The diametric magnet is rotatable within the bore to switch the magnetic field external to the device on and off.

To switch the magnetic field external to the magnetic switchable device 790 on, the diametric magnet is rotated so that the one of poles of the diametric magnet is orientated towards each of the blocks of ferrous or magnetisable material. The diametric magnet therefore magnetised the ferrous or magnetisable material.

To switch the magnetic field external to the magnetic switchable device 790 off, the diametric magnet is rotated so that neither of poles diametric magnet are orientated towards each of the blocks of ferrous or magnetisable material. As such, the diametric magnet does not magnetise the ferrous or magnetisable material.

To include the magnetic switchable device 790 into the probe 740, the probe 740 may comprise a magnetisable core 793.

The magnetisable core 793 defines two spaced apart poles 795. As shown in Figure 12, the magnetisable core 793 may comprise a U-core or C-core (i.e. the core is U-shaped). Thus, the magnetisable core 793 may comprises two legs 796 connected by a bridge 597.

The two legs 796 may be substantially parallel to each other. The core 793 may comprise any suitable magnetisable material. A non-limiting example of a suitable material is iron.

As shown in the embodiment in Figure 11, the spaced apart poles 795 may be provided by the legs 796 of the magnetisable core 793. Each pole 795 has a pole face 794. The pole faces 794 may be slightly curved to conform to the outer surface of a flexible pipe 20.

The magnetic switchable device 790 may be connected to the bridge 797 of the magnetisable core 793. As shown in Figure 11, the magnetic switchable device 790 may be embedded in the bridge 797 of the magnetisable core 793 or form at least a part of the bridge of the magnetisable core. As such, the device 790 may magnetise the core 793 and provide the static magnetic field. The magnetic switchable device 790 may comprise a switch 792 configured to turn the magnetic field on and off. In certain embodiments, the switch 792 may be connected the control unit 60.

Connecting the magnetic switchable device 790 to the magnetisable core 793 may improve application to the static field to the ligaments in the flexible pipe 20 because the poles faces 794 of the core 793 may be positioned on an outer surface 21 of the flexible pipe 21 alongside the first magnetic core 42. As such, the alternating and static magnetic fields may overlap in the flexible pipe 20 during use.

In a similar manner to the embodiment shown in Figures 7 to 10, the magnetisable core 793 may be larger than the first electromagnet core 42. Therefore, the first electromagnet core 42 resides between the two poles 795 of the magnetisable core 793. The size of the magnetisable core 793 may also improve the ease of providing the static magnetic field with a greater magnitude than the alternating magnetic field.

In the same was as described for the embodiment shown in Figures 7 to 10, the first and second electromagnet cores 42, 793 may be orientated or arranged such that a direction of the alternative magnetic field is perpendicular to the direction of the static magnetic field.

The above-described apparatuses each comprise means for producing an alternating magnetic field and means for producing a static magnetic field that are arranged such that the alternating magnetic field and the static magnetic field may selectively overlap at a ligament within the flexible pipe during use. Each of the above-described apparatus may be used according to the following method to monitor stress in steel ligaments within a flexible pipe.

Figure 12 shows a method 1200 for monitoring stress in steel ligaments within a flexible pipe according to an embodiment of the invention.

The method comprises a step 1202 of subjecting a ligament to a first magnetic field and obtaining a first measurement indicative of a magnetic flux density near an outer surface of the pipe adjacent to the ligament and then a step 1204 of subjecting the ligament to a second magnetic field and obtaining a second measurement indicative of the magnetic flux density near the outer surface of the pipe adjacent to the ligament. To subject a ligament to the first and second magnetic fields, the apparatus of any of the above-described embodiments may be aligned with a location by the outer surface of the flexible pipe. This may be achieved by aligning the probe of any of the above-described embodiments with the location by the outer surface of the flexible pipe. Due to the number of ligaments in a flexible pipe, placing the apparatus at any position on the outer surface results in at least one ligament being subjected to the magnetic fields from the apparatus.

The first magnetic field comprises an alternating magnetic field and the second magnetic field comprises a combination of the alternating magnetic field and a static magnetic field. Therefore, the step 1202 of subjecting the ligament to the first magnetic field may comprise supplying a current to the first drive coil from the alternating current source of the apparatus. Subjecting the ligament to the second magnetic field in step 1204 may comprise supplying a current to the first drive coil from the alternating current source of the apparatus and producing the static magnetic field. The static magnetic field may be produced differently depending on which embodiment of the apparatus is used. With the exception of the embodiment shown in Figure 11, producing the static magnetic field may comprise supplying a constant current via that constant current source or sources. For example, when using the apparatus shown in any of the embodiments in Figures 4 to 10, producing the static magnetic field may comprise supplying a current to the at least one second drive coil from the constant current source or sources. When the apparatus of the embodiment shown in Figure 11 is used, producing the static magnetic field may comprise switching on the magnetic switchable device. Therefore, the static magnetic field that the ligament is subjected to may be switched on or off.

It follows that the magnetic field experienced by the ligament when the first measurement is taken is different to the magnetic field experienced by the ligament when the second measurement. The ligament is not subjected to the static field when the first measurement is taken.

One of the sensors of the above-described apparatuses may be used to obtain the first and second measurements. The sensor senses an induced voltage which is indicative of magnetic flux density at the sensor location. In particular, the sensor senses the reluctance of a part of a magnetic circuit that extends between the poles of the first electromagnet core. Therefore, the first and second measurements comprise voltage measurements from the sensor.

The voltage induced in the sensor may differ for the first and second measurements depending on the stress in a ligament. The voltage induced in the sensor is dependent on the relative magnetic permeability of the ligament. If the relative magnetic permeability of a ligament increases, the magnitude of the voltage induced in the sensor increases. Stress in a ligament affects the relative magnetic permeability of the ligament because ferromagnetic materials change their magnetic domain structure under the influence of mechanical stresses. However, applying a static magnetic field reduces the sensitivity of the relative magnetic permeability to stress. The sensitivity of the relative magnetic permeability to stress may be reduced to substantially zero if a sufficiently large static magnetic field is used. As the first measurement is obtained whilst subjecting the ligament to an alternating magnetic field and the second measurement is obtained whilst subjecting the ligament to an alternating magnetic field and a static magnetic field, the first and second measurements differ depending on the stress in a ligament. The first measurement varies with the stress in the ligament but the second measurement is less sensitive or insensitive to stress in the ligament. The magnitude of alternating magnetic field may be sufficiently small so that is does not reduce or significantly reduce the sensitivity of the relative magnetic permeability of the ligaments to stress.

The static magnetic field may have a magnitude that is greater than the alternating magnetic field. The magnetic flux density of the static magnetic field may be at least 400 mT at the ligament. The magnetic flux density of the alternating magnetic field may be at least 10 mT at the ligaments.

As the first and second measurements depend differently on stress in the ligament, the first and second measurement may be used, as described below, to evaluate in stress in a ligament. This may be particularly useful for identifying any broken ligaments as the stress in a broken ligament will be significantly reduced compared to an unbroken ligament.

Once the first and second measurements have been made, the method comprises a step 1205 of comparing the first and second measurements. In certain embodiments, the comparison may be performed by the signal analysis unit. The first and second measurements may be amplified by the head amplifier 54 prior to the comparison.

In certain embodiments, the first and second measurements may be compared by subtracting one of the first and second measurements from the other of the first and second measurements. The subtraction may be done in the complex voltage plane with the first and second measurements being represented as two vectors. That is, the first and second measurements may be represented as complex functions and the complex functions of the first and second measurements may be subtracted from each other.

The method comprises the step 1209 of evaluating stress in the ligament from the comparison of the first and second measurements. The comparison may indicate if a ligament is differently loaded, broken or unbroken because the first and second measurements depend differently on stress in the ligament. For example, the presence of a broken wire or ligament may be identified from the observation that the first and second measurements are not substantially altered by application of the static magnetic field. The method may therefore comprise detecting whether the ligament is broken based on the comparison of the first and second measurements.

In alternative embodiments, the step 1205 of comparing the first and second measurements may comprise a step 1206 of determining a parameter sensitive to stress from each of the first and second measurements. That is, a first parameter sensitive to stress is determined from the first measurement and a second parameter sensitive to stress is determined form the second measurement.

To determine the parameters sensitive to stress, the voltage signals of each of the first and second measurements may be resolved into an amplitude and a phase. The phase comprises a parameter sensitive to stress. As such, a parameter sensitive to stress may be determined from each of the first and second measurements.

In certain embodiments, the first and second measurements may be corrected for lift-off (i.e. the gap between the probe and the outer surface of the flexible pipe) when determining the parameter sensitive to stress. This may help improve the accuracy of the method because lift off can affect the voltage signals provided by the sensor.

Correcting for lift-off may be done by taking two sets of correction measurements with the apparatus used in the method prior to taking the first and second measurements. A first set of correction measurements may be taken with the probe adjacent to the outer surface of the flexible pipe. The first set of correction measurement comprises the voltage sensed by the sensor at a plurality of different locations around the circumference of the flexible pipe whilst subjecting the ligaments in the flexible pipe to the alternating magnetic field. A second set of correction measurements is taken with the probe is lifted off the outer surface of the pipe so that there is a gap between the probe and the flexible pipe. The gap may be at least 2 mm, for example. In the same way as the first set of correction measurements, the second set of correction measurement comprises the voltage sensed by the sensor at a plurality of different locations around the circumference of the flexible pipe whilst subjecting the ligaments in the flexible pipe to the alternating magnetic field.

Each set of the correction measurements are then resolved into a component of the magnetic flux density in-phase with the alternating magnetic field, and a component of the magnetic flux density which is in-quadrature with the alternating magnetic field. The in-phase and in-quadrature components of the correction measurements are plotted on a graph of quadrature component against in-phase component. Each set of the correction measurements lies on a curved contour on the graph. The contour defined by the first set of correction measurements intersects the contour defined by the second set of correction measurements. The intersection point is determined from the graph. The intersection point has an in-phase component and an in-quadrature component. The intersection point may be used to obtain parameters sensitive to stress which are independent of lift-off from the first and second measurements. The intersection point of the two contours will be close to a point on the graph which corresponds to a free volume measurement. The free volume measurement is the in-phase and in-quadrature components of the voltage sensed by the sensor in a free volume (i.e. at a distance away from the flexible pipe so that the ligaments in the flexible pipe do not affect the sensed voltage). If the flexible pipe is in a sub-sea location, the first set of measurements, the second set of measurements and the free volume measurement may all be taken underwater.

A parameter sensitive to stress that is independent of lift-off may be determined for each of the first and second measurements using the intersection point as follows. The sensed voltage of the first measurement may be resolved into in-phase and in-quadrature components. The amplitude and phase of the first measurement may then calculated relative to the intersection point. As such, a corrected amplitude and a corrected phased are determined for the first measurement. The corrected phase provides a parameter sensitive to stress which is independent of lift off. In the same way, a corrected phase may be determined for the second measurement. The same intersection point is used to account for lift off for both the first and second measurements. Alternatively, the method described in EP 1436604 may be used to correct for lift off and provide a parameter sensitive to stress.

In certain embodiments, the first measurement and the second measurement each comprise a plurality of measurements each made at a different frequency of the alternating magnetic field. Measurements at different frequencies may be taken in succession. Different frequencies may penetrate the layers in flexible pipe by different amounts. As such, a frequency which penetrates the first tensile armour layer in the flexible pipe may not penetrate to the second tensile armour layer in the flexible pipe. This is because in a flexible pipe which has ligaments in different layers, a varying magnetic field will induce eddy currents within the ligaments of a layer, and those eddy currents will induce a magnetic field in an adjacent layer, so the depth to which the signals penetrate the flexible pipe may be altered. Therefore, in certain embodiments, a range of frequencies of alternating magnetic field may be used. The ratio between the lowest frequency and the highest frequency may be more than 10, for example 20, 30, 50, 80, 100, 150 or even 200. In an embodiment, the first and second measurements are made at several different frequencies, for example at least five different frequencies, and optionally eight or ten different frequencies or more; such frequencies may for example be selected between 20 Hz and 4000 Hz, although frequencies between 20 Hz and 1000 Hz may be satisfactory.

Additionally, measurements taken at different frequencies enable variations in the number of ligaments in the vicinity of a probe to be distinguished from variations in the stress in the ligament. Similarly measurements at different frequencies enable variations caused by the spacing of the ligaments and by the presence of any current loops between ligaments to be distinguished from variations in the stress in the ligament.

The step 1205 of comparing the first and second measurements may then comprise an additional step 1208 of comparing the parameter sensitive to stress from each of the first and second measurements. That is, the first parameter sensitive to stress (i.e. from the first measurement) may be compared to the second parameter sensitive to stress (i.e. from the second measurement)*.* As described above, the parameter sensitive to stress may be the phase or the corrected phase of the respective measurement.

In certain embodiments, this comparison may be done by subtracting the parameter sensitive to stress determined from one of the first and second measurements from the parameter sensitive to stress determined from the other of the measurements. That is, subtracting one of the first and second parameters sensitive to stress from the other. The resulting difference provides a direct estimate of stress in the ligament. The direct estimate of stress resulting from the comparison of the first and second measurements may then be used to evaluate stress in the ligament at step 1209 of the method because the first and second measurements depend differently on stress in the ligament.

The presence of a broken wire or ligament may be identified from the observation that the parameter sensitive to stress in a broken ligament are not altered by application of the static magnetic field. The method may therefore comprise detecting whether the ligament is broken based on the comparison of the parameters sensitive to stress.

Detecting stress in a ligament by comparing of two measurements in different magnetic fields for the same ligament reduces the effect of residual stress on the monitoring of stress in the flexible pipe. Residual stress in a flexible pipe can vary significantly between the different ligaments in the flexible pipe which may obfuscate determining whether a ligament is broken.

The method provides an improved method for monitoring stress in a flexible pipe. The flexible pipe may be monitored using this method without affecting production or operation of the flexible pipe. Since the method relies of two different magnetic fields, rather than use of two different pressures, the method can be used on a greater variety of flexible pipes. For example, the method may be used to monitor stress in low-pressure production pipes or pipes where the pressure cannot be easily changed. Furthermore, since the first and second measurements may be made in succession the method may reduce inspection time by reducing the number of times the probe needs to be scanned around or along a flexible pipe.

Embodiments of the method that include the steps 1206, 1208 of determining a parameter sensitive to stress for each of the first and second measurements may result in the method being less sensitive to any differences between wires than the embodiment of the method where the step 1205 of comparing the first and second measurements comprises subtracting one of the first and second measurements directly from the other of the first and second measurements.

The above-described method 1200 may be repeated to inspect each ligament, or series of ligaments, in the flexible pipe. The method 1200 may be repeated by aligning the apparatus with different locations on outer surface of the pipe and obtaining the first and second measurements at each of the different locations on the outer surface of the pipe. This may be achieved by scanning the probe of any of the above-described apparatuses about the outer surface of the pipe by, for example, rotating the probe about the outer surface of the flexible pipe or moving the probe in a direction parallel to the longitudinal axis of the pipe. By scanning the circumference of the pipe or a sufficient length of the pipe and obtaining the first and second measurements at a plurality of different locations each the ligaments in the flexible pipe may be subjected to each of the first and second magnetic fields.

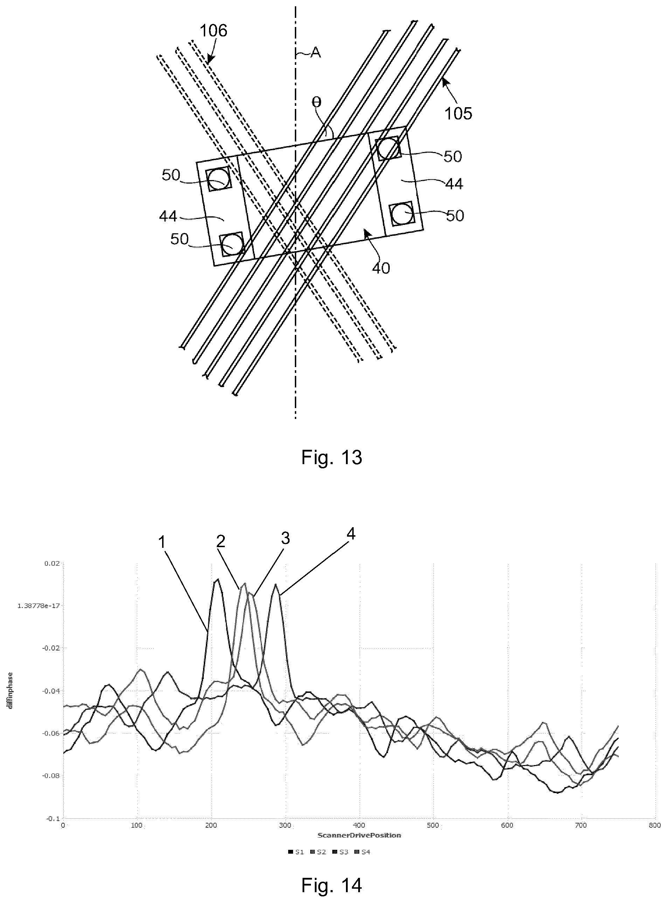

Therefore, in such embodiments, the method may comprise subjecting each ligament, or a series of ligaments, of a plurality of ligaments to the first magnetic field and obtaining the first measurement for each ligament, or a series of ligaments, and then subjecting each ligament, or the series of ligaments, of a plurality of ligaments to the second magnetic field and obtaining the second measurement for each ligament, or the series of ligaments. The method may comprise identifying an individual ligament from the plurality of ligaments based on the first and second measurements. A method of identifying a ligament from the plurality of ligaments is described below with reference to Figures 13 and 14.

The method may comprise comparing the first and second measurements for each ligament. In certain embodiments, the comparison of the first and second measurements may comprise subtracting one of the first and second measurements from the other of the first and second measurements. As described above, the subtraction may be done in the complex voltage plane.

In alternative embodiments, the comparison of the first and second measurements may comprise determining a parameter sensitive to stress from each of the first and second measurements. That is, for each ligament, or for a ligament in a series of ligaments, a parameter sensitive to stress is determined from both the first and second measurements for that ligament. The comparison of the first and second measurements may comprise may also comprise comparing the parameter sensitive to stress from the first measurement with the parameter sensitive to stress from the second measurements for each ligament. The comparison is done for each of the ligaments separately. In certain embodiments, this comparison may be done for each ligament in the same manner as described above by subtracting the parameter sensitive to stress determined from one of the first and second measurements from the parameter sensitive to stress determined from the other of the measurements. The parameter sensitive to stress may be corrected for lift-off as described above. The resulting difference provides a direct estimate of stress in each ligament.

The direct estimate of stress resulting from the comparison of the first and second measurements may be used to evaluate stress in the ligament at step 1209 of the method. For example, a graph may be created by plotting the direct estimate of stress in each ligament against the different locations on outer surface of the pipe where the apparatus was aligned. Variation in values of the direct estimate of stress across the different locations may indicate changes in stress. The variations may indicate that one of the ligaments has broken or identify or differently loaded ligaments. The method may comprise detecting if any of the ligaments are broken based on variation in the parameters sensitive to stress or the direct estimate of stress for the different ligaments.

In an alternative embodiment, the comparison of the parameters sensitive to stress may be performed in a different way to subtracting the parameter sensitive to stress determined from one of the first and second measurements from the parameter sensitive to stress determined from the other of the measurements. In an alternative embodiment of the method, the comparison may comprise creating a graph by plotting the parameter sensitive to stress from the second measurement against the parameter sensitive to stress from the first measurement for each of the ligaments. That is, plotting the parameter sensitive to stress from the second measurement against the parameter sensitive to stress from the first measurement for each of the different locations around the outer surface of the flexible pipe. The parameter sensitive to stress from second measurement may be on the x-axis and the parameter sensitive to stress from the first measurement may be on the y-axis. The graph will produce a substantially straight line, variations from the straight line will occur for a broken or differently loaded ligament. The comparison further comprises fitting a best-fit line to the graph. The best-fit line will be a straight line. The orthogonal distance between each data point on the plot and the line of best fit provides an alternative direct estimate of stress in each ligament.

The alternative direct estimate of stress resulting from the comparison of the first and second measurements may then be used to evaluate stress in the ligament in step 1209 of the method. A graph may be created by plotting the alternative direct estimate of stress in each ligament against the different locations on outer surface of the pipe where the apparatus was aligned. Variation in values of the alternative direct estimate of stress across the different locations may indicate changes in stress.

In certain embodiments, both the first and second measurements for one ligament are obtained prior to obtaining the first and second measurements for a subsequent ligament. Therefore, when the probe is placed at a location on the outer surface of the pipe, the first measurement is taken whilst providing the first magnetic field and then the static magnetic field is turned on and the second measurement is taken. Once both the first and second measurements have been taken, the probe may be moved to another location on the outer surface of the pipe. Therefore, there may be no movement of the probe between the first and second measurements being taken. This may remove the need to make corrections for probe movement, movement of the ligaments or the making or breaking of local or remote currents loops thereby improving the ease of monitoring stress in a flexible pipe.

In the above-described method, a first measurement and a second measurement are taken for each ligament, or a series of ligaments. The two measurements would be obtained by one of the sensors in the apparatus. However, each of the above-described apparatuses comprises four sensors. Therefore, each sensor in the apparatus may sense a first measurement and a second measurement for the ligament, or the series of ligaments. The first and second measurements from each sensor may be taken simultaneously and processed separately. Therefore, the method may comprise obtaining four sets of first measurements and four sets of second measurements. Measurements from the four sensors may help distinguish between different ligaments in different tensile armour layers of the flexible pipe as described below with reference to Figure 13.

Figure 13 shows a diagrammatic plan view of the probe 40 of the embodiment shown in Figure 3 in use adjacent to the outer surface of the flexible pipe. However, any of the above-described probes 340, 540, 640, 740 may be used. The line A represents a line along the surface of the flexible pipe parallel to its longitudinal axis; some of the ligaments of the first tensile armour layer 105 are shown in solid lines (only five are shown), and some of the ligaments of the second tensile armour layer 106 are shown in broken lines (only three are shown). The ligaments in the first tensile armour layer 105 may be in directions at an angle between 25° and 42° to the direction of the line A, while the ligaments in the second tensile armour layer 106 may be at an angle that may be the same, or may be up to 4° different, but inclined in the opposite direction. For example the ligaments in the first tensile armour layer 105 may be at an orientation of +33°, and the ligaments in the second tensile armour layer 106 at an orientation of -34°, relative to the line A. The probe 40 is shown as being arranged such that a straight line between the centres of the pole faces 44 (corresponding to the free space direction of the magnetic field) is at an angle Θ to the orientation of the ligaments in the first tensile armour layer 105. This angle Θ is shown as about 47° by way of example, but different results will be obtained if the probe 40 is at different angles Θ. In the arrangement and position as shown each sensor 50 locates above a different ligament in the first tensile armour layer 105 and each sensor coil 50 locates above a different ligament in the second tensile armour layer 106. None of the two sensor coils will be located above the same ligament at the same time. However, the order by which the sensor pass over the ligaments in each layer can be changed by altering the angle Θ. Additionally, at certain angles the sensor coils of one pole may both pass over the same ligament at the same time and at certain angles a sensor coil on one pole and a sensor coil on the other pole may both pass over the same ligament at the same time. In certain embodiments, measurements are made with probes 40 that are set at angles Θ equal to -30°, +30°, +60°, and +90°.

The orientation of the probe 40 may be selected to take into account the orientations of the ligaments in the layers 105, 106. The orientations of the probe 40 may be selected to achieve the following four situations: the poles 43 are linked by ligaments in the first layer 105 but not linked by those in the second tensile armour layer 106; the poles 43 are not linked by ligaments in either the first tensile armour layer 105 or the second tensile armour layer 106; the poles 43 are not linked by ligaments in the first tensile armour layer 105 but are linked by those in the second tensile armour layer 106; and the poles 43 are linked by ligaments in both the layers 105, 106. However, depending on the dimensions of the probe 40 and the orientations of the ligaments, not all of these options are necessary available. It will be understood that the phrase "the poles 43 are linked" by specific ligaments means that those specific ligaments pass directly under both the poles 43 of the probe 40; consequently magnetic field lines between the poles 43 will tend to follow paths that extend longitudinally along such specific ligaments. Those specific ligaments then form part of a magnetic circuit that links the poles 43.

The orientations of the ligaments in the tensile armour layers 105, 106 are usually known, and the scanning direction is known. In the arrangement and orientation shown in Figure 13, in which the sensor 50 are sufficiently small that each sensor 50 may lie above a different ligament in both the layers 105, 106, then if the probe 40 is scanned in a given direction (for example the upwards direction parallel to the line A), and there is one broken ligament, then the sequence in which the separate sensor 50 pass over the broken ligament will depend upon whether the broken ligament is in the first tensile armour layer 105 or the second tensile armour layer 106. This helps distinguish between broken ligaments in different layers 105, 106.

Figure 14 shows an example of the results of the method 1200 for monitoring stress in a flexible pipe. The method 1200 was implemented using the probe 40 of the embodiment shown in Figure 3 and the static magnetic field production means 90 shown in Figure 4. In the method 1200, each ligament in the flexible pipe 20 was inspected. The probe 40 was rotated around the outer surface 21 of the pipe 20 between the two second drive coils 91. The probe 40 was aligned with different locations on outer surface 21 of the pipe 20 and the first and second measurements were taken at each of the different locations from each Of the four sensors 50 of the probe 40. A parameter sensitive to stress was determined from each of the first and second measurements taken by four sensors the probe at the different locations.

For each of the different locations on the outer surface 21 of the pipe 20 and for each sensor 50, the parameter sensitive to stress determined from one of the first and second measurements was subtracted from the parameter sensitive to stress determined from the other of the first and second measurements. Figure 14 shows the resulting difference (i.e. direct estimate of stress in each ligament) for each sensor 50 against the location of the probe on the pipe 20 in mm. Each line 1, 2, 3, 4 on the plot shows the results from a different sensor 50 in the probe 40. The graph shows a significant peak between 200 and 300 mm. This peak indicates that a ligament has been broken. As such, the variation in the direct estimate of stress shows that a ligament is broken. The peaks of the lines from the different sensors do not occur at the same position of the probe 40. As the orientation of the probe 40 whilst the measurements were taken and the orientation of ligaments within the flexible pipe 20 are known, the sequence by which the sensors 50 pass over the broken ligament can be used to determine which ligament in which layer is broken.

During use, any of the above-described probes may be held adjacent to an outer surface 21 of a flexible pipe 20 so that ligaments within the flexible pipe 20 are subjected to the alternating magnetic field and the static magnetic field. To subject each ligament in a flexible pipe to the magnetic fields, the probe may be scanned along the surface of the flexible pipe. This may be achieved in various different ways.

Referring now to Figure 15, this shows a side view of the probe 40 of the embodiment in Figure 3 during inspection of the flexible pipe 20. However, any of the above-described probes 340, 540, 640, 740 may be used. Figure 15 shows a scanning mechanism 62 that includes two collars 63 and 64 which are clamped onto the flexible pipe. A threaded drive shaft 65 extends between a bearing 66 held by the collar 63, and an electric motor 67 held by the collar 64. The probe 40 is attached to a support bar 68 which engages with the threaded drive shaft 65. In use, the probe 40 is set up at an appropriate angle Θ, such as 60°; and the electric motor 67 is repeatedly and briefly activated to rotate the drive shaft 65 and consequently move the probe 40 along the flexible pipe. With this scanning mechanism 62, the probe 40 is scanned along a line parallel to the line A shown in Figure 3, being moved in steps, and at each successive position the first and second measurements are made. Typically the probe 40 is moved along a distance no more than 15 mm, for example no more than 10 mm. In one example the probe 40 is moved along by 4 mm at each step, this distance being less than the separation between adjacent ligaments in the first tensile armour layer 105 and the second tensile armour layer 106 of the flexible pipe 20.

As the ligament in both the tensile armour layers 105, 106 follow helical paths, by scanning along the length of the flexible pipe 20 the probe 40 will eventually pass over every ligament in the pipe 20; the length of the drive shaft 65 is at least as long as the helical pitch of the ligament in the tensile armour layers 105, 106, to ensure that every ligament in each layer 105, 106 is scanned.

Additional measurements may be obtained by setting up a probe 40 at a different angle Θ, and repeating the procedure described above. If the probe 40 has a face that is shaped to fit the outer surface of the pipe 20 this may require a different probe 40.

Figures 16 and 17 show an alternative scanning mechanism is arranged to scan the probe 40 along a circular path around the circumference of the flexible pipe. In the example shown in Figures 16 and 17, the probe of the embodiment shown in Figure 3 is included. However, any of the above-described probes 340, 540, 640, 740 may be used.

Figures 16 and 17 show a scanner 70 arranged to scan three probes 40 circumferentially around a flexible pipe 20. A ring 72 may be clamped around the flexible pipe 20, and the scanner 70 may comprise a frame 71 linked to the ring 72 so that it can move circumferentially but not axially. The scanner 70 may include three probes 40, each probe 40 may be enclosed within a plastic casing 73, and each probe may be connected to the respective control unit 60. Power and data cables 74 may be connected to each control unit 60. As shown in the Figures, the frame 71 may be in three parts, one part arranged to carry each plastic casing 73. The parts may be linked together. Two of the links may be provided by pivoted linking bars 75, while the third link comprises adjustable tie rods 76. Each plastic casing 73 may be held into the frame 71 by spring-loaded bolts 77, which urge the poles 43 of the probes 40 towards the flexible pipe. The frame 71 may include wheels 79 on either side of each probe 40. The wheels 79 may rest on the surface of the flexible pipe. The provision of the tie rods 76 and the spring-loaded bolts 77 may allow flexible pipes 20 of different diameters to be accommodated. Almost all the components of the scanner 70 may be formed of hard engineering plastic, to minimise their magnetic effect.

As shown in Figures 16 and 17, at the end of the frame 71 furthest from the ring 72 there may be a motor and drive wheel module 80, to which drive cables 82 may be connected. The motor and drive wheel module 80 may include an electric motor which drives a drive wheel pressed against the outer surface of the flexible pipe. The rotation axis of the drive wheel may be parallel to the longitudinal axis of the flexible pipe 20. Actuation of the module 80 may therefore move the frame 71 and the three probes 40 circumferentially around the flexible pipe, guided by the ring 72. As described in relation to the apparatus of figure 16 and 17, the scanner 70 may be repeatedly moved a short distance, for example, no more than 15 mm or no more than 4 or 5 mm. At each new position of each probe 40 the first and second measurements may be taken.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

Certain embodiments are described in the following clauses:
Clause 1. A method for monitoring stress in steel ligaments within a flexible pipe, the method comprising:
   subjecting a ligament to a first magnetic field and obtaining a first measurement indicative of a magnetic flux density near an outer surface of the pipe adjacent to the ligament;
   subjecting the ligament to a second magnetic field and obtaining a second measurement indicative of the magnetic flux density near the outer surface of the pipe adjacent to the ligament;
   comparing the first and second measurements; and
   evaluating stress in the ligament from the comparison of the first and second measurements;
   wherein the first magnetic field comprises an alternating magnetic field and wherein the second magnetic field comprises a combination of the alternating magnetic field and a static magnetic field.
Clause 2. The method according to clause 1, wherein the static magnetic field has a magnitude greater than a magnitude of the alternating magnetic field.
Clause 3. The method according to any one of the preceding clauses, wherein comparing the first and second measurements comprises:
   determining a parameter sensitive to stress from each of the first and second measurements; and
   comparing the parameter sensitive to stress from each of the first and second measurements.
Clause 4. The method according to clause 3, wherein comparing the parameter sensitive to stress from each of the first and second measurements comprises subtracting the parameter sensitive to stress determined from one of the first and second measurements from the parameter sensitive to stress determined from the other measurement.
Clause 5. The method according to any one of the preceding clauses, wherein the first measurement and the second measurement each comprise a plurality of measurements each made at a different frequency of the alternating magnetic field.
Clause 6. The method according to any one of the preceding clauses comprising:
   subjecting each ligament of a plurality of ligaments to the first magnetic field and obtaining the first measurement for each ligament;
   subjecting each ligament of a plurality of ligaments to the second magnetic field and obtaining the second measurement for each ligament; and
   comparing, for each ligament, the first and second measurements;
   evaluating stress in each ligament from the comparison of the first and second measurements.
Clause 7. The method according to clause 6, wherein both the first and second measurements for one ligament are obtained prior to obtaining the first and second measurements for a subsequent ligament.
Clause 8. The method according to clause 6 or 7, comprising detecting if any of the ligaments are broken or differently loaded based on variation in comparison of first and second measurements for the different ligaments.
Clause 9. The method according to any one of the preceding clauses comprising:
   providing an apparatus, the apparatus comprising:
      a first electromagnet core defining two spaced part poles and a first drive coil wound around the first electromagnet core;
      an alternating current source configured to supply alternating current to the first drive coil to generate the alternating magnetic field;
      means for selectively producing a static magnetic field; and
      sensors configured to sense magnetic flux density; and
   aligning the apparatus with a location by the outer surface of the pipe;
   wherein subjecting a ligament to a first magnetic field comprises supplying a current to the first drive coil from the alternating current source; and
   wherein subjecting a ligament to the second magnetic field comprises supplying a current to the first drive coil from the alternating current source and producing the static magnetic field from the means for selectively producing a static magnetic field.
Clause 10. The method according to clause 9, wherein the means for selectively producing a static magnetic field comprises a second drive coil and a constant current source configured to selectively supply a constant current to the second drive coil; and wherein subjecting the ligament to the second magnetic field comprises supplying a current to the first drive coil from the alternating current source and supplying a current to the second drive coil from the constant current source.
Clause 11. The method according to clause 9, wherein the means for selectively producing a static magnetic field comprises a magnetic switchable device; and wherein subjecting the ligament to the second magnetic field comprises supplying a current to the first drive coil from the alternating current source and switching on the magnetic switchable device.
Clause 12. The method according to clause 9, wherein the means for selectively producing a static magnetic field comprises a constant current source configured to selectively supply a constant current to the first drive coil; and wherein subjecting the ligament to the second magnetic field comprises supplying a current to the first drive coil from the alternating current source and from the constant current source.
Clause 13. The method according to any one of clause 9 to 12, when dependent on clause 6, wherein repeating the first and second measurements for each of the plurality of ligaments comprises aligning the apparatus with different locations on the outer surface of the pipe.
Clause 14. An apparatus for monitoring stress in steel ligaments within a flexible pipe, the apparatus comprising:
   a first electromagnet core defining two spaced part poles and a first drive coil wound around the first electromagnet core;
   an alternating current source configured to supply alternating current to the first drive coil to generate an alternating magnetic field;
   a static magnetic field production means configured to selectively produce a static magnetic field that overlaps with the alternating magnetic field; and
   sensors configured to sense magnetic flux density in response to the alternating and static magnetic fields.
Clause 15. An apparatus according to clause 14, wherein the static magnetic field production means comprises at least one second drive coil and a constant current source configured to selectively supply a constant current to the second drive coil.
Clause 16. An apparatus according to clause 15, wherein the at least one second drive coil is wound around the first electromagnet core.
Clause 17. An apparatus according to clause 16, wherein the first electromagnet core comprises two legs, each leg defining one of the spaced apart poles; and wherein each leg comprises a plurality of fingers and at least one second drive coil is wound around each of the plurality of fingers.
Clause 18. The method according to clause 15, wherein the static magnetic field production means comprises a second electromagnet core defining two spaced part poles and wherein the at least one second drive coil is wound around the at least one second electromagnet core.
Clause 19. The method according to clause 15, wherein the static magnetic field production means comprises two second electromagnet cores and wherein at least one second drive coil is wound around each of the second electromagnet cores, and optionally wherein the two second electromagnet cores are arranged so that a pole of the two second electromagnet cores is adjacent to a corner of the poles of the first electromagnetic core.
Clause 20. The method according to clause 19 or 20, wherein the first electromagnet core resides between the poles of the second electromagnet core or cores and/or wherein the first electromagnet core and the second electromagnet core or cores are orientated such that a direction of the alternating magnetic field is perpendicular to the direction of the static magnetic field.
Clause 21. An apparatus according to clause 15, wherein the at least one second drive coil is configured to be wound around the flexible pipe.
Clause 22. An apparatus according to clause 14, wherein the static magnetic field production means comprises a magnetic switchable device.
Clause 23. An apparatus according to clause 22, wherein the magnetic switchable device is connected to a magnetisable core that defines two spaced apart poles.
Clause 24. An apparatus according to clause 23, wherein the first electromagnet core resides between the poles of the magnetisable core and/or the first electromagnet core and the magnetisable core are orientated such that a direction of the alternating magnetic field is perpendicular to the direction of the static magnetic field.
Clause 25. An apparatus according to clause 14, wherein the static magnetic field production means comprises a constant current source configured to selectively supply a constant current to the first drive coil to generate the static magnetic field.

## Claims

1. An apparatus for monitoring stress in steel ligaments within a flexible pipe, the apparatus comprising:
a first electromagnet core defining two spaced part poles and a first drive coil wound around the first electromagnet core;
an alternating current source configured to supply alternating current to the first drive coil to generate an alternating magnetic field;
a static magnetic field production means configured to selectively produce a static magnetic field that overlaps with the alternating magnetic field; and
sensors configured to sense magnetic flux density in response to the alternating and static magnetic fields.

2. An apparatus according to claim 1, wherein the static magnetic field production means comprises at least one second drive coil and a constant current source configured to selectively supply a constant current to the second drive coil.

3. An apparatus according to claim 2, wherein the at least one second drive coil is wound around the first electromagnet core.

4. An apparatus according to claim 3, wherein the first electromagnet core comprises two legs, each leg defining one of the spaced apart poles; and wherein each leg comprises a plurality of fingers and at least one second drive coil is wound around each of the plurality of fingers.

5. An apparatus according to claim 4, wherein the first electromagnet core comprises a bridge extending between the two legs, and wherein the first drive coil may be wound around the bridge.

6. An apparatus according to claim 2, wherein the static magnetic field production means comprises a second electromagnet core defining two spaced part poles and wherein the at least one second drive coil is wound around the at least one second electromagnet core.

7. An apparatus according to claim 2, wherein the static magnetic field production means comprises two second electromagnet cores and wherein at least one second drive coil is wound around each of the second electromagnet cores, and optionally wherein the two second electromagnet cores are arranged so that a pole of the two second electromagnet cores is adjacent to a corner of the poles of the first electromagnetic core.

8. An apparatus according to claim 6 or 7, wherein the first electromagnet core resides between the poles of the second electromagnet core or cores.

9. An apparatus according to any of claims 6 to 8, wherein the first electromagnet core and the second electromagnet core or cores are orientated such that a direction of the alternating magnetic field is perpendicular to the direction of the static magnetic field.

10. An apparatus according to claim 2, wherein the at least one second drive coil is configured to be wound around the flexible pipe.

11. An apparatus according to claim 1, wherein the static magnetic field production means comprises a magnetic switchable device.

12. An apparatus according to claim 11, wherein the magnetic switchable device is connected to a magnetisable core that defines two spaced apart poles.

13. An apparatus according to claim 12, wherein the first electromagnet core resides between the poles of the magnetisable core.

14. An apparatus according to claim 12 or 13, wherein the first electromagnet core and the magnetisable core are orientated such that a direction of the alternating magnetic field is perpendicular to the direction of the static magnetic field.

15. An apparatus according to claim 1, wherein the static magnetic field production means comprises a constant current source configured to selectively supply a constant current to the first drive coil to generate the static magnetic field.
